# EUROPÄISCHE PATENTSCHRIFT

(11) **EP 1 074 209 B1**
(45) Veröffentlichungstag und Bekanntmachung des Hinweises auf die Patenterteilung: **03.12.2003**
(21) Anmeldenummer: 99115423.8
(22) Anmeldetag: 04.08.1999
(51) Int. Cl.: A47J 31/40

(54) **Kaffeemaschine**
Coffee machine
Machine à café

(43) Veröffentlichungstag der Anmeldung: 07.02.2001
(73) Patentinhaber: WMF WÜRTTEMBERGISCHE METALLWARENFABRIK AG, 73309 Geislingen/Steige (DE)
(72) Erfinder: App, Manfred, 73312 Geislingen (DE); Arndt, Peter, 89134 Blaustein (DE); Grupp, Martin, 73550 Wissgoldingen (DE); Gussmann, Jochen, 73312 Geislingen (DE); Lustig, Wilfried, 73540 Heubach (DE); Riegert, Hermann, 89558 Treffelhausen (DE); Schützle, Bernd, 73344 Gruibingen (DE)
(74) Vertreter: Grünecker, Kinkeldey, Stockmair & Schwanhäusser Anwaltssozietät

(56) Entgegenhaltungen:
- EP-A- 0 528 757
- EP-A- 0 864 284
- US-A- 5 492 054

## Beschreibung

Die Erfindung bezieht sich auf eine Kaffeemaschine der in den Oberbegriffen der Ansprüche 1 und 10 erläuterten Art.

Eine Kaffeemaschine dieser Art ist aus der EP 0 864 284 A1 bekannt. Die bekannte Kaffeemaschine weist eine Brüheinrichtung auf, deren obere Öffnung durch eine Abdeckung verschlossen werden kann, die über eine Verschwenkführung von einem Antrieb in die verschiedenen Positionen betätigt wird. Die Verschwenkführung sorgt dafür, daß sich die Abdeckung sowohl parallel zur Ebene der Öffnung bewegen kann als auch senkrecht dazu, so daß die Abdeckung zum Schutz der Dichtungen zum Öffnen etwas von der Öffnung abgehoben wird, hin- und zurückverschwenkt und zum Schließen wieder auf die Öffnung abgesenkt werden kann. Darüber hinaus sperrt die Verschwenkführung die Abdeckung gegen die Wirkung des Innendrucks in der Brüheinrichtung. Zu diesem Zweck enthält die Verschwenkführung ein Hebelgetriebe mit einer Mehrzahl von Stiften, die in entsprechenden Führungen überkopf in eine Über-Totpunktstellung gekippt werden müssen. Zwar bot die bekannte Verschwenkführung gegenüber dem damaligen Stand der Technik wesentliche Vorteile, auch hinsichtlich einer kompakten, konstruktiv einfachen Bauweise, es hat sich jedoch herausgestellt, daß die bekannte Konstruktion noch verbesserungsbedürftig ist. Insbesondere ist die Bauhöhe der bekannten Verschwenkführung zu groß, wodurch der Antriebsmotor für die Abdeckung unterhalb der Brüheinrichtung angeordnet werden muß. Zum anderen ist die bekannte Verschwenkführung aufwendig zu fertigen und schwierig zu montieren, was zu einer höheren Kostenbelastung führt.

Der Erfindung liegt somit die Aufgabe zugrunde, eine Kaffeemaschine der genannten Art bereitzustellen, die kostengünstig in der Herstellung und trotzdem funktionssicher im Gebrauch ist.

Die Aufgabe wird durch die Kaffeemaschine der Ansprüche 1 oder 10 gelöst.

Durch die erfindungsgemäße Ausgestaltung, ist es möglich, die Verschwenkführung konstruktiv und funktionell äußerst einfach auszugestalten, d.h. gemäß Anspruch 1 ein Spindelgetriebe oder gemäß Anspruch 10 ein Ratschengetriebe so in Kombination mit entsprechenden Mitnehmeranschlägen einzusetzen, daß auch mit diesen relativ einfachen Getrieben der komplizierte Bewegungsweg mit einer sich senkrecht zur Öffnung erstreckenden Komponente und einer sich parallel zur Öffnung erstreckenden Komponente zu verwirklichen ist.

Vorteilhafte Weiterbildungen der Erfindung sind den Unteransprüchen zu entnehmen.

Die Ausgestaltung nach Anspruch 2 stellt eine besonders einfache Zuordnung der Getriebeteile zur Abdeckung und zum Antrieb dar. Die Ausgestaltung nach Anspruch 3 ermöglicht eine sanfte Mitnahme der Abdeckung ohne daß maßgenau zu fertigende Anschläge notwendig sind. Durch die Maßnahme nach Anspruch 4 muß die Antriebsbewegung nicht punktgenau gestoppt werden. Zweckmäßigerweise wird die Bewegung der Abdeckung durch Federkraft verstärkt, wobei in der Ausgestaltung nach Anspruch 8 diese Aufgabe durch eine einzige Feder erfüllt werden kann.

Anspruch 9 beschreibt ein besonders bevorzugtes Ausführungsbeispiel der Ausbildung gemäß Anspruch 1.

Die Ausgestaltung nach Anspruch 11 beschreibt eine besonders bevorzugte Zuordnung der Schrägflächen des Ratschengetriebes zur Abdeckung und zum Antrieb.

Wiederum sind die in den Ansprüchen 12 bis 15 beschriebenen Anschläge vorgesehen, die die zielgenaue Bewegung der Abdeckung vereinfachen.

Anspruch 16 beschreibt ein besonders bevorzugtes Ausführungsbeispiel der Ausbildung gemäß Anspruch 10.

Der sperrbare Antrieb gemäß Anspruch 17 stellt für beide Ausführungsbeispiele eine besonders einfache Möglichkeit dar, die Abdeckung gegen ein unbeabsichtigtes, selbsttätiges Öffnen unter dem Einfluß des Innendrucks im Brühzylinder dar.

Durch die Maßnahme nach Anspruch 18 kann die Bauhöhe entscheidend verringert werden.

Ausführungsbeispiele der Erfindung werden nachfolgend anhand der Zeichnungen näher erläutert. Es zeigen:
- Fig. 1: eine schematische Darstellung einer erfindungsgemäß ausgerüsteten Kaffeemaschine,
- Fig. 2: eine vergrößerte Teildarstellung im Schnitt eines ersten Ausführungsbeispiels der Erfindung, und
- Fig. 3: eine vergrößerte Teildarstellung im Schnitt eines zweiten Ausführungsbeispiels der Erfindung.

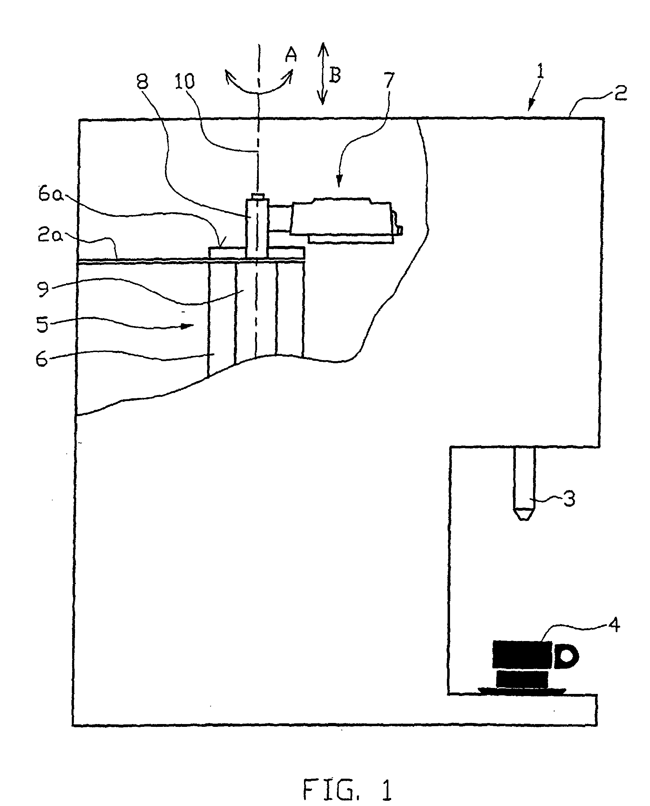

Fig. 1 zeigt in schematischer Darstellung eine Kaffeemaschine 1 mit einem Gehäuse 2, aus dem ein Kaffeeauslaß 3 ausmündet, unter den ein Gefäß 4, dargestellt ist eine Tasse, zum Befüllen gestellt werden kann. Die Kaffeemaschine kann eine der üblichen, automatisch betätigten Kaffeemaschinen sein, bei denen der Benutzer über nicht dargestellte Bedienknöpfe einen Brühvorgang für ein gewünschtes Kaffeegetränk, beispielsweise Filterkaffee oder Espresso, in einer gewünschten Menge, Tassenportion, Kännchenportion oder Vorrat, in Gang setzt, und die Kaffeemaschine durch eine ebenfalls nicht dargestellte Steuerung die notwendigen Arbeitsschritte selbsttätig ausführt, um das gewünschte Getränk auszugeben. Zu diesem Zweck ist im Gehäuse 2 eine Brüheinrichtung 5 untergebracht, die einen der üblichen Brühzylinder 6 enthält der über einen geeigneten Träger 2a mit senkrechter Mittelachse so im Gehäuse 2 untergebracht ist, daß seine stirnseitige Öffnung 6a in einer im wesentlichen horizontalen Ebene liegt und so angeordnet ist, daß über die Öffnung 6a Kaffeemehl in den Brühzylinder 6 eindosiert werden kann. Die Dosiereinrichtung für Kaffeemehl sowie andere, bei derartigen Kaffeemaschinen übliche oder wünschenswerte Bauteile, wie beispielsweise der Heißwasserbereiter und die Zufuhrleitungen für das Wasser oder der Vorratsbehälter für Kaffeemehl oder Kaffeebohnen, sind in Fig. 1 der Übersichtlichkeit halber nicht dargestellt.

Die Öffnung 6a kann durch eine Abdeckung 7 geöffnet und druckdicht verschlossen werden, die über eine Verschwenkführung 8 mit einem Antrieb 9 in Form eines Motors verbunden ist. Die Verschwenkführung 8 ist hier nur schematisch dargestellt und befindet sich im wesentlichen im Bereich des Trägers 2a, so daß der Antrieb 9 direkt neben dem Brühzylinder 6 untergebracht werden kann, wobei die Antriebsachse des Motors parallel zur Mittelachse des Brühzylinders verläuft.

In der in Fig. 1 dargestellten Position befindet sich die Abdeckung 7 in Offenstellung, in der die Abdeckung 7 die Öffnung 6a nach oben freigibt, so daß Kaffeemehl eingefüllt werden kann. Mit Hilfe des Antriebs 9 und der Verschwenkführung 8 kann die Abdeckung 7 um eine Schwenkachse 10 in einem Bewegungsweg, der eine Bewegungskomponente in Richtung des Doppelpfeiles A parallel zur Ebene der Öffnung 6a und eine Bewegungskomponente in Richtung des Doppelpfeiles B senkrecht zur Ebene der Öffnung 6a aufweist, zwischen der dargestellten Offenposition und einer Schließposition bewegt werden, in der die Abdeckung 6 über die Öffnung 6a verschwenkt und auf die Öffnung 6a abdichtend aufgepreßt wird. In dieser Schließposition ist der Antrieb gesperrt, was beispielsweise durch Wahl eines geeigneten Motors erfolgen kann, so daß sich die Abdeckung 7 auch dann nicht selbsttätig öffnen kann, wenn in der Brüheinheit unter Innendruck gebrüht wird, beispielsweise bei der Espressobereitung.

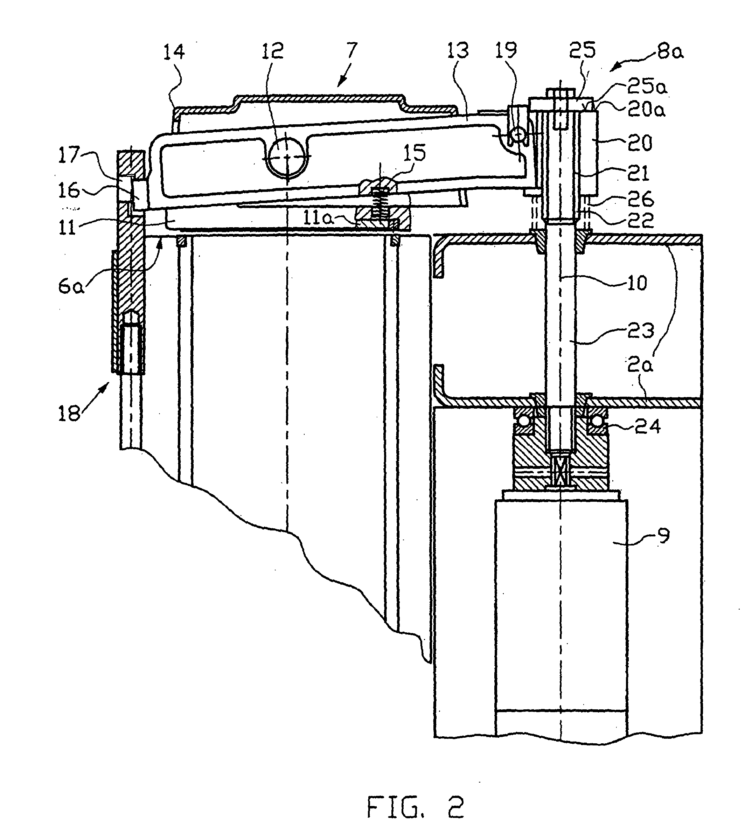

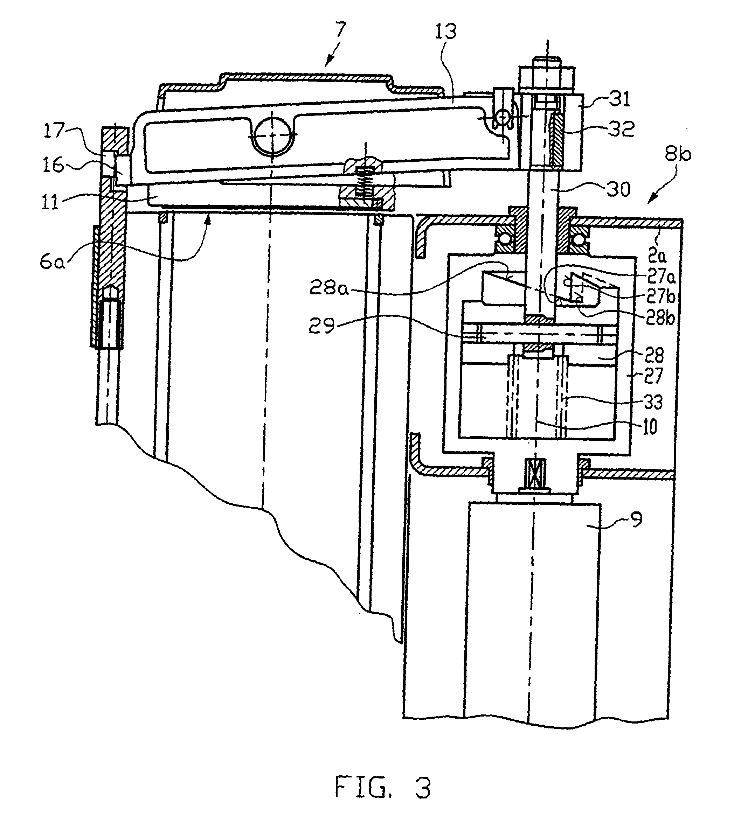

Wie die Seitenansicht der Fig. 2 und 3 zeigen, hat die Abdeckung 7 eine der Abdekkung der EP 864 284 A1 vergleichbare Konstruktion, so daß für nähere Einzelheiten auf diese Druckschrift verwiesen werden kann. Die Abdeckung 7 enthält das eigentliche Dichtteil 11 mit einer Ringdichtung 11a, das über einen Bolzen 12 schwenkbar mit einem Auslegerarm 13 verbunden ist, und eine Haube 14. Das Dichtteil 11 ist mit der Haube 14 verbunden und am Auslegerarm 13 über eine Feder 15 abgestützt.

Ein Ende des Auslegerarmes 13 weist eine Nase 16 auf, mit der die Abdeckung 7 in ein gehäusefestes Gegenlager 17 eingreifen kann, dessen Position über eine Verstelleinrichtung 18 verstellbar ist. Das Gegenlager 17 ist als Längsschlitz ausgebildet, der sich in Verschwenkrichtung der Abdeckung 7 erstreckt und an einer Stelle endet, an der sich der Dichtring 11 a an seiner korrekten Dichtposition oberhalb der Öffnung 6a befindet, wenn die Nase 16 am Ende des Schlitzes des Gegenlagers 17 anschlägt.

Der Auslegerarm 13 ist weiterhin über einen horizontalen Bolzen 19 schwenkbar aber ansonsten drehfest mit einer Hülse 20 verbunden, die als Getriebeteil der als Spindelgetriebe ausgebildeten Verschwenkführung 8a der Fig. 2 ausgebildet ist. Die Gewindehülse 20 enthält ein Innengewinde 21, das auf einem Außengewinde 22 einer Antriebswelle 23, deren Antriebsachse mit der Schwenkachse 10 zusammenfällt, axial verschraubbar ist. Die Antriebswelle 23 ist in einem Lager 24 aufgenommen und direkt vom Motor 9 angetrieben.

Am dem Motor 9 abgewandten Ende der Antnebswelle 23 ist eine Anschlagscheibe 25 aufgeschraubt, deren Unterseite eine erste Reibungsflache 25a bildet, mit der eine an der Oberseite der Gewindehülse 20 ausgebildete, zweite Reibungsfläche 20a in Eingriff kommt, wenn die Gewindehülse 20 an ihrem höchsten Punkt angelangt ist. Weiterhin ist zwischen dem Träger 2a und der Gewindenulse 20 eine Feder 26 angeordnet. Die Feder 26 belastet die Gewindehülse 20 in Richtung auf die Anschlagscheibe 25 während der senkrecht zur Öffnung 6averlaufenden Komponente des Bewegungsweges, und belastet die Gewindehülse 20 beim Verschwenken der Abdekkung 7 in Schließposition. Beide Funktionen können beispielsweise durch eine Schrauben-Druckfeder erfüllt werden, deren Enden an der Gewindehülse 20 und dem Träger 2a so festgelegt sind, daß die Feder 26 sowohl bei der axialen Bewegung nach unten in Schließposition als auch bei der Verschwenkbewegung gespannt wird.

Die Kaffeemaschine mit der Verschwenkführung 8a der Fig. 2 arbeitet wie folgt:

In der in Fig. 1 gezeichneten Stellung, in der Kaffeemehl eindosiert werden kann, befindet sich die Gewindehülse 20 im Anschlag an der Anschlagscheibe 25, wobei die beiden Reibungsflächen 20a und 25a durch die Feder 26 aufeinander gepreßt werden und die Feder 26 in Umfangsrichtung gespannt ist. Der Auslegerarm 13 erstreckt sich in gleicher Weise schräg nach unten, und das Dichtteil 11 hat sich um den Bolzen 12 waagerecht gestellt, wie dies in Fig. 2 dargestellt ist. Wenn nach dem Eindosieren des Kaffeemehls die Öffnung 6a verschlossen werden soll, wird der Antrieb 9 in Gang gesetzt, und dreht die Antriebswelle 23 und die Anschlagscheibe 25. Durch die Reibung zwischen den beiden Reibungsflächen 25a und 20a, die über die Feder 26 gegeneinander gepreßt werden, und durch die Umfangsspannung der Feder 26 wird zunächst die Gewindehüle 20 in der Verschwenkbewegung mitgenommen, bis die Nase 16 des Auslegerarmes 13 an das Gegenlager 17 anstößt, das Dichtteil 11 sich somit in seiner korrekten Position oberhalb der Öffnung 6a befindet. Dreht sich jetzt die Antriebswelle 23 weiter, wird (eine geeignete Windungsrichtung der Gewinde 21 und 22 vorausgesetzt) die Gewindehülse 20 nach unten gezogen, wobei die Feder 26 in Axialrichtung gespannt wird. Der Antrieb läuft weiter, bis sich der Auslegerarm um den Bolzen 19 in eine im wesentlichen parallele Stellung zum Dichtteil 11 verschwenkt und die Feder 15 gespannt hat, so daß das Dichtteil 11 mit einem vorbestimmten Druck auf die Öffnung 6a gepreßt wird, der ausreicht, dem Brühdruck im Inneren des Brühzylinders 6 zu widerstehen. Der Antrieb 9 wird angehalten und sperrt die Antriebswelle 23 gegen Drehung, so daß sich die Abdeckung 7 nicht unbeabsichtigt öffnen kann.

Ist der Brühvorgang beendet, so wird der Antrieb in Gegenrichtung in Gang gesetzt und verschiebt die Gewindehülse 20, unterstützt durch die Feder 26, nach oben, wobei gleichzeitig die Umfangsspannung der Feder 26 erhöht wird und der Schwenkvorgang parallel zur Ebene der Öffnung 6a eingeleitet wird, so daß die Nase 16 vom Gegenlager 17 freikommt. Der Antrieb 9 bleibt solange eingeschaltet, bis die Gewindehülse 20 wieder mit ihrer Reibungsfläche 20a in Reibeingriff mit der Reibungsfläche 25a der Anschlagscheibe 25 gelangt ist und sich die Abdeckung 7 wieder in die Offenposition der Fig. 1 verschwenkt hat.

Fig. 3 zeigt ein weiteres Ausführungsbeispiel einer erfindungsgemäß ausgerüsteten Kaffeemaschine, die sich vom Ausführungsbeispiel der Fig. 2 nur durch eine andere Verschwenkführung 8a unterscheidet. In Bezug auf die anderen Bauteile kann somit auf die Erläuterung der Fig. 2 verwiesen werden.

Im Ausführungsbeispiel gemäß Fig. 3 enthält die Verschwenkführung 8b eine Art Ratschengetriebe mit einem ersten Getriebeelement, das als Drehhülse 27 oder Drehkäfig oder dgl. ausgebildet ist. Die Drehhülse 27 wird direkt über den Motor 9 um die Schwenkachse 10 drehend angetrieben. Die dem Motor 9 abgewandte, von der Schwenkachse 10 durchsetzte Stirnseite der Drehhülse 27 ist mit einer ersten Schrägfläche 27a versehen, die in der Art einer schiefen Ebene ausgebildet ist und quer zur Drehachse 10 verläuft. Am höchsten Punkt der ersten Schrägfläche 27a schließt sich in Axialrichtung eine erste Anschlagfläche 27b an.

Im Inneren der Drehhülse 27 ist ein zweites Getriebeelement in Form einer Scheibe 28 um die Drehachse 10 verdrehbar und in Axialrichtung verschiebbar angeordnet. Auch die Scheibe 28 weist eine zur ersten Schrägfläche 27a korrespondierende, zweite Schrägfläche 28a auf, die in eine axiale Anschlagfläche 28b übergeht. Beide Schrägflächen sind korrespondierend, zweckmäßigerweise unter einem selbsthemmenden Winkel, geneigt, und können vollflächig aufeinander aufliegen. Auch die beiden Anschlagflächen 27b und 28b sind im wesentlichen korrespondierend ausgebildet.

Die Scheibe 28 ist über einen Stift 29 fest mit einer Antriebswelle 30 verbunden, deren Mittellinie mit der Drehachse 10 zusammenfällt. Die Antriebswelle 30 erstreckt sich auf der dem Antrieb 9 gegenüberliegenden Seite aus der Drehhülse 27 heraus und ist im Träger 2a drehbar und axial verschiebbar gelagert. Am oberen Ende der Antriebswelle 30 ist die Abdeckung 7, beispielsweise über ein Lagerauge 31 und einen Keil 32, so mit der Antriebswelle 30 verbunden, daß jede axiale und jede Drehbewegung der Antriebswelle 30 auf die Abdeckung 7 übertragen wird.

Die Drehscheibe 28 ist im Inneren der Drehhülse 27 über eine Feder 33 abgestützt, die das Gewicht der Abdeckung 7 mit der Antriebswelle 30 aufnimmt und die beiden Schrägflächen 27a und 28a in Eingriff miteinander drückt.

Die mit der Verschwenkführung 8b ausgerüstete Kaffeemaschine arbeitet wie folgt

In der Stellung gemäß Fig. 1, in der die Abdeckung 7 zum Einfüllen des Kaffeemehls in die Offenposition geschwenkt ist, liegen die beiden Schrägflächen 27a und 28a vollflächig aufeinander auf und werden in dieser Stellung durch die Feder 33 gehalten. Ist das Kaffeemehl eindosiert, wird der Antrieb 9 in Gang gesetzt und verdreht die Drehhülse 27 in Richtung Schließposition der Abdeckung 7. Durch die zweckmäßige Neigungsrichtung der Schrägflächen 27a und 28a drückt die Schrägfläche 27a gegen die Schrägfläche 28a und nimmt die Scheibe 28 bei der Verschwenkbewegung mit, unterstützt durch die Federkraft der Feder 33, bis die Nase 16 am Gegenlager 17 anschlägt, wenn sich das Dichtteil 11 genau oberhalb der Öffnung 6a befindet. Beim Weiterdrehen der Drehhülse 27 kann somit die drehfest mit der Nase 16 verbundene Scheibe 28 nicht mehr mitgenommen werden, und die Schrägfläche 27a läuft auf der Schrägfläche 28a auf und drückt die Scheibe 28 unter Belastung der Feder 33 in Fig. 3 nach unten, so daß auch die Antriebswelle 30 und der Auslegerarm 13 nach unten, d.h. in Richtung auf die Öffnung 6a gezogen werden. Ist die vorbestimmte Anpreßkraft erreicht, stoppt der Antrieb und sperrt die Bewegung, so daß eine weitere Bewegung der Scheibe 28 nach unten durch die Auflage der Abdeckung 7 auf der Öffnung 6a und eine Rückschwenkbewegung der Abdeckung 7 durch die Neigung der Schrägflächen 27a und 28a verhindert wird.

Soll die Abdeckung 7 wieder geöffnet werden, wird der Antrieb 9 in Gegenrichtung in Gang gesetzt, worauf die Schrägflächen 27a und 28a wieder in ihren vollen Eingriff miteinander gleiten, was bedeutet, daß sich die Scheibe 28 zusammen mit der Abdeckung 7 wieder nach oben bewegt. Liegen beide Schrägflächen 27a und 28a wieder vollflächig aufeinander, so kommen die beiden Anschlagflächen 27b und 28b in Eingriff miteinander, so daß die Scheibe 28 bei einer weiteren Bewegung der Drehhülse 27 in der Drehbewegung mitgenommen wird, so daß die Abdeckung 7 sich wieder in Offenstellung verschwenkt.

In Abwandlung der beschriebenen und gezeichneten Ausführungsbeispiele können die Getriebeelemente spiegelbildlich angeordnet sein, beispielsweise in der Ausgestaltung nach Fig. 2 die Gewindehülse mit dem Antrieb und die Spindel mit der Abdekkung oder in der Ausgestaltung nach Fig. 3 die Drehhülse mit der Abdeckung und die Scheibe mit dem Antrieb. Andere Ausgestaltungen sind denkbar. So kann beispielsweise die Funktion der Feder in Fig. 2 durch zwei getrennte Fedem wahrgenommen werden. Unter Umständen kann auch die Feder ganz entfallen. Auch die Deckelausgestaltung ist nicht auf das beschriebene Ausführungsbeispiel beschränkt.

## Patentansprüche

1. Kaffeemaschine mit einer Brüheinrichtung, die eine durch eine Abdeckung verschließbare Öffnung aufweist, wobei die Abdeckung durch einen über eine Verschwenkführung auf die Abdeckung einwirkenden Antrieb zwischen einer Offenposition und einer Schließposition in einem Bewegungsweg verschwenkbar ist, der eine parallel zur Ebene der Öffnung und eine senkrecht dazu verlaufende Komponente aufweist, **dadurch gekennzeichnet, daß** die Verschwenkführung (8a) ein Spindelgetriebe und einen Mitnahmeanschlag (25) enthält.

2. Kaffeemaschine nach Anspruch 1, **dadurch gekennzeichnet, daß** das Spindelgetriebe eine fest mit der Abdeckung (7) verbundene Gewindehülse (20) mit Innengewinde (21 ) und ein auf einer Antriebswelle (23) angeordnetes Außengewinde (22) aufweist

3. Kaffeemaschine nach Anspruch 1 oder 2, **dadurch gekennzeichnet, daß** der Mitnahmeanschlag ein Paar zum Auführen der Parallel-Komponente des Bewegungswegs in Eingriff bringbare Reibungsflächen (20a, 25a) enthält.

4. Kaffeemaschine nach einem der Ansprüche 1 bis 3, **dadurch gekennzeichnet, daß** ein die Parallel-Komponente des Bewegungswegs begrenzender Anschlag (16, 17) vorgesehen ist.

5. Kaffeemaschine nach Anspruch 3 oder 4, **dadurch gekennzeichnet, daß** die Reibungsflächen (20a, 25a) die Senkrecht-Komponente des Bewegungswegs begrenzen.

6. Kaffeemaschine nach einem der Ansprüche 1 bis 5, **dadurch gekennzeichnet, daß** eine in Richtung der Senkrecht-Komponente des Bewegungswegs wirkende Feder (26) vorgesehen ist.

7. Kaffeemaschine nach einem der Ansprüche 1 bis 6, **dadurch gekennzeichnet, daß** eine in Richtung der Parallel-Komponente des Bewegungswegs wirkende Feder (26) vorgesehen ist.

8. Kaffeemaschine nach den Ansprüchen 6 und 7, **dadurch gekennzeichnet, daß** die Feder (26) eine kombinierte Verdreh-Druckfeder ist, die die Reibungsflächen (20a, 25a) in Mitnahmeeingriff aufeinander drückt und beim Verschwenken der Abdeckung (7) in Offenposition spannbar ist.

9. Kaffeemaschine nach einem der Ansprüche 1 bis 8, **dadurch gekennzeichnet, daß** die Abdeckung (7) mit einer Gewindehülse (20) verbunden ist, die auf ein Außengewinde (22) einer Antriebswelle (23) in Axialrichtung verschraubbar und zusammen mit der Antriebswelle (23) verdrehbar ist, daß mit der Antriebswelle (23) eine Reibungsfläche (25a) eines Mitnahmeanschlags (25) fest verbunden ist, an die eine mit der Gewindehülse (20) verbundene Reibungsfläche (20a) zur Begrenzung der Senkrecht-Komponente und zum Ausführen der Parallel-Komponente des Bewegungsweges in Richtung Offenposition anschlägt, und daß ein weiterer Anschlag (16, 17) zum Begrenzen der Parallel-Komponente und zum Einleiten der Senkrecht-Komponente des Bewegungswegs der Abdeckung (7) in Richtung Schließposition vorgesehen ist.

10. Kaffeemaschine mit einer Brüheinrichtung, die eine durch eine Abdeckung verschließbare Öffnung aufweist, wobei die Abdeckung durch einen über eine Verschwenkführung auf die Abdeckung einwirkenden Antrieb zwischen einer Offenposition und einer Schließposition in einem Bewegungsweg verschwenkbar ist, der eine parallel zur Ebene der Öffnung und eine senkrecht dazu verlaufende Komponente aufweist, **dadurch gekennzeichnet, daß** die Verschwenkführung (8b) ein Ratschengetriebe mit einem Paar parallel zueinander geneigter, aufeinanderliegender und relativ zueinander bewegbarer Schrägflächen (27a, 28a) sowie einen Mitnahmeanschlag (27b, 28b) enthält.

11. Kaffeemaschine nach Anspruch 10, **dadurch gekennzeichnet, daß** eine der Schrägflächen (27a) an einem mit dem Antrieb (9) verbundenen, ersten Getriebeelement (27) und die andere Schrägfläche (28a) an einem mit der Abdeckung (7) verbundenen, zweiten Getriebeelemente (28) angeordnet ist, wobei das zweite Getriebeelement (28) unterhalb des ersten Getriebeelementes (27) angeordnet und senkrecht dazu bewegbar ist.

12. Kaffeemaschine nach Anspruch 10 oder 11, **dadurch gekennzeichnet, daß** der Mitnahmeanschlag (27b, 28b) jeweils eine jeder Schrägfläche (27a, 28a) zugeordneter Anschlagfläche zum Ausführen der Parallel-Komponente des Bewegungsweges in Offenposition enthält.

13. Kaffeemaschine nach einem der Ansprüche 10 bis 12, **dadurch gekennzeichnet, daß** ein Anschlag (16, 17) zum Ausführen der Senkrecht-Komponente des Bewegungsweges vorgesehen ist.

14. Kaffeemaschine nach einem der Ansprüche 10 bis 13, **dadurch gekennzeichnet, daß** ein Anschlag (16, 17) zum Begrenzen der Parallel-Komponente des Bewegungsweges in Schließposition vorgesehen ist.

15. Kaffeemaschine nach einem der Ansprüche 10 bis 14, **dadurch gekennzeichnet, daß** die Schrägflächen (27a, 28a) in Anlage aneinander durch eine Feder (33) belastet sind.

16. Kaffeemaschine nach einem der Ansprüche 10 bis 15, **dadurch gekennzeichnet, daß** der Antrieb (8) mit einem Getriebeelement in Form einer Drehhülse (7) antriebsverbunden ist, deren eine Innenseite mit einer der Schrägflächen (27a) und einer Anschlagfläche (27b) des Mitnehmeranschlags versehen ist, daß im Inneren der Drehhülse (27) eine über eine Antriebswelle (30) drehfest mit der Abdeckung (7) verbundenes, mit der anderen Schrägfläche (28a) und der anderen Anschlagfläche (28b) des Mitnehmeranschlags versehenes Getriebelement (28) relativ zur Drehhülse (27) und mit ihr verdrehbar sowie axial verschiebbar untergebracht ist, daß eine Feder (33) vorgesehen ist, die die Schrägflächen (27a und 28a) in Anlage gegeneinander belastet, und daß ein weiterer Anschlag (16, 17) vorgesehen ist, der die Parallel-Komponente des Bewegungsweges in Richtung Schließposition begrenzt.

17. Kaffeemaschine nach einem der Ansprüche 1 bis 16, **dadurch gekennzeichnet, daß** der Antrieb (9) sperrbar ist.

18. Kaffeemaschine nach einem der Ansprüche 1 bis 17, **dadurch gekennzeichnet, daß** der Antrieb (9) einen Motor enthält, der neben der Brüheinrichtung (5) angeordnet ist.

## Claims

1. Coffee machine with an infusing device which has an opening which can be closed by a cover, wherein the cover can be swivelled by a drive acting on the cover via a swivel guide between an open position and a closed position in a movement path, which has one component running parallel to the plane of the opening and one running perpendicular thereto, **characterised in that** the swivel guide (8a) contains a spindle gear and a slaving stop (25).

2. Coffee machine according to claim 1, **characterised in that** the spindle gear has a threaded sleeve (20), rigidly connected to the cover (7) with inner thread (21) and an outer thread (22) arranged on a drive shaft (23).

3. Coffee machine according to claim 1 or 2, **characterised in that** the slaving stop contains a pair of friction faces (20a, 25a) which can be brought into engagement to form the parallel component of the movement path.

4. Coffee machine according to one of claims 1 to 3, **characterised in that** a stop (16, 17) limiting the parallel component of the movement path is provided.

5. Coffee machine according to claim 3 or 4, **characterised in that** the friction faces (20a, 25a) limit the perpendicular component of the movement path.

6. Coffee machine according to one of claims 1 to 5, **characterised in that** a spring (26) acting in the direction of the perpendicular component of the movement path is provided.

7. Coffee machine according to one of claims 1 to 6, **characterised in that** a spring (26) acting in the direction of the parallel component of the movement path is provided.

8. Coffee machine according to claims 6 and 7, **characterised in that** the spring (26) is a combined torsional and pressure spring which presses the friction faces (20a, 25a) on to one another into slaving engagement and can be tensioned into the open position when the cover (7) is swivelled.

9. Coffee machine according to one of claims 1 to 8, **characterised in that** the cover (7) is connected to a threaded sleeve (20), which can be screwed on to an outer thread (22) of a drive shaft (23) in the axial direction and is rotatable together with the drive shaft (23), to the drive shaft (23) is rigidly connected a friction face (25a) of a slaving stop (25), against which a friction face (20a) connected to the threaded sleeve (20) impacts to limit the perpendicular component and to form the parallel component of the movement path in the direction of the open position, and a further stop (16, 17) is provided to limit the parallel component and to conduct the perpendicular component of the movement path of the cover (7) into the direction of the closed position.

10. Coffee machine with an infusing device which has an opening which can be closed by a cover, wherein the cover can be swivelled by a drive acting on the cover via a swivel guide between an open position and a closed position in a movement path, which has one component running parallel to the plane of the opening and one running perpendicular thereto, **characterised in that** the swivel guide (8a) contains a ratchet gear with a pair of diagonal faces (27a, 28a), inclined parallel to one another, lying on top of one another and movable relative to one another, and also a slaving stop (27b, 28b).

11. Coffee machine according to claim 10, **characterised in that** one of the diagonal faces (27a) is arranged on a first gear element (27) connected to the drive (9) and the other diagonal face (28a) is arranged on a second gear element (28) connected to the cover (7), wherein the second gear element (28) is arranged underneath the first gear element (27) and is movable perpendicular thereto.

12. Coffee machine according to claim 10 or 11, **characterised in that** the slaving stop (27b, 28b) contains in each case a stop face allocated to each diagonal face (27a, 28a) to form the parallel component of the movement path in the open position.

13. Coffee machine according to one of claims 10 to 12, **characterised in that** a stop (16, 17) is provided to form the perpendicular component of the movement path in the closed position.

14. Coffee machine according to one of claims 10 to 13, **characterised in that** a stop (16, 17) is provided to limit the parallel component of the movement path in the closed position.

15. Coffee machine according to one of claims 10 to 14, **characterised in that** the diagonal faces (27a, 28a) are loaded by a spring (33) in contact with one another.

16. Coffee machine according to one of claims 10 to 15, **characterised in that** the drive (8) is drive-connected to a gear element in the form of a rotating sleeve (7), one inner side of which is provided with one of the diagonal faces (27a) and one stop face (27b) of the slaving stop, inside the rotating sleeve (27) a gear element (28), connected as fixed against rotation to the cover (7) via a drive shaft (30) and provided with the other diagonal face (28a) and the other stop face (28b) of the slaving stop, is accommodated relative to the rotating sleeve (27) and as rotatable with it and also as axially displaceable, a spring (33) is provided which loads the diagonal faces (27a and 28a) in contact with one another and a further stop (16, 17) is provided which limits the parallel component of the movement path in the direction of the closed position.

17. Coffee machine according to one of claims 1 to 16, **characterised in that** the drive (9) is lockable.

18. Coffee machine according to one of claims 1 to 17, **characterised in that** the drive (9) contains a motor arranged next to the infusing device (5).

## Revendications

1. Machine à café munie d'un dispositif d'échaudage, présentant une ouverture pouvant être fermée par un recouvrement, le recouvrement étant susceptible de pivoter au moyen d'un entraînement agissant sur le recouvrement par l'intermédiaire d'un guidage pivotant, entre une position ouverte et une position fermée, lors d'une course de déplacement, qui présente une composante parallèle au plan de l'ouverture et une composante perpendiculaire à celui-ci, **caractérisée en ce que** le guidage pivotant (8a) contient une transmission à broche et une butée d'entraînement (25).

2. Machine à café selon la revendication 1, **caractérisée en ce que** la transmission à broche présente une douille filetée (20), reliée rigidement au recouvrement (7), munie d'un taraudage (21) et d'un filetage extérieur (22) disposé sur un arbre d'entraînement (23).

3. Machine à café selon la revendication 1 ou 2, **caractérisée en ce que** la butée d'entraînement contient une paire de faces de friction (20a, 25a), susceptibles d'être mises en prise pour produire la composante parallèle de la course de déplacement.

4. Machine à café selon l'une des revendications 1 à 3, **caractérisée en ce qu'**est prévue une butée (16, 17) délimitant la composante parallèle de la course de déplacement.

5. Machine à café selon la revendication 3 ou 4, **caractérisée en ce que** les faces de friction (20a, 25a) délimitent la composante perpendiculaire de la course de déplacement.

6. Machine à café selon l'une des revendications 1 à 5, **caractérisée en ce qu'**est prévu un ressort (26), agissant dans la direction de la composante perpendiculaire de la course de déplacement.

7. Machine à café selon l'une des revendications 1 à 6, **caractérisée en ce qu'**est prévu un ressort (26), agissant dans la direction de la composante parallèle de la course de déplacement.

8. Machine à café selon les revendications 6 et 7, **caractérisée en ce que** le ressort (26) est un ressort de compression et rotation combinées qui presse l'une sur l'autre les faces de friction (20a, 25a) pour obtenir une mise en prise avec entraînement et qui peut être serré en position d'ouverture lors du pivotement du recouvrement (7).

9. Machine à café selon l'une des revendications 1 à 8, **caractérisée en ce que** le recouvrement (7) est relié à une douille filetée (20), qui est susceptible d'être vissée en direction axiale sur un filetage extérieur (22) d'un arbre d'entraînement (23), et est susceptible de tourner conjointement avec l'arbre d'entraînement (23), **en ce que**, à l'arbre d'entraînement (23) est reliée rigidement une face de friction (25a) d'une butée d'entraînement (25), face de friction sur laquelle vient en butée une face de friction (20a) reliée à la douille filetée (20), dans le but de limiter la composante perpendiculaire et d'effectuer la composante parallèle de la course de déplacement dans la direction de la position d'ouverture, et **en ce qu'**une autre butée (16, 17) est prévue pour limiter la composante parallèle et pour introduire la composante perpendiculaire de la course de déplacement du recouvrement (7) dans la direction de la position de fermeture.

10. Machine à café munie d'un dispositif d'échaudage, présentant une ouverture pouvant être fermée par un recouvrement, le recouvrement étant susceptible de pivoter au moyen d'un entraînement agissant sur le recouvrement par l'intermédiaire d'un guidage pivotant, entre une position ouverte et une position fermée, lors d'une course de déplacement, qui présente une composante parallèle au plan de l'ouverture et une composante perpendiculaire à celui-ci, **caractérisée en ce que** le guidage pivotant (8b) contient une transmission à cliquet, munie d'une paire de faces obliques (27a, 28a), inclinées et parallèles entre elles, venant en appui les unes sur les autres et déplaçables les unes par rapport aux autres, et contient une butée d'entraînement (27b, 28b).

11. Machine à café selon la revendication 10, **caractérisée en ce que** l'une des faces obliques (27a) est disposée sur un premier élément de transmission (27) relié à l'entraînement (9), et l'autre face oblique (28a) est disposée sur un deuxième élément de transmission (28) relié au recouvrement (7), le deuxième élément de transmission (28) étant disposé au-dessous du premier élément de transmission (27) et déplaçable perpendiculairement par rapport à celui-ci.

12. Machine à café selon la revendication 10 ou 11, **caractérisée en ce que** la butée d'entraînement (27b, 28b) contient respectivement une face de butée associée à chaque face oblique (27a, 28a), pour produire les composantes parallèles de la course de déplacement, à la position ouverte.

13. Machine à café selon l'une des revendications 10 à 12, **caractérisée en ce qu'**est prévue une butée (16, 17) pour produire la composante perpendiculaire de la course de déplacement.

14. Machine à café selon l'une des revendications 10 à 13, **caractérisée en ce qu'**une butée (16, 17) est prévue pour limiter la composante parallèle de la course de déplacement, en position de fermeture.

15. Machine à café selon l'une des revendications 10 à 14, **caractérisée en ce que** les faces obliques (27a, 28a) sont chargées, en appui l'une sur l'autre, par un ressort (33) .

16. Machine à café selon l'une des revendications 10 à 15, **caractérisée en ce que** l'entraînement (8) est relié en entraînement à un élément de transmission ayant la forme d'une douille rotative (7), dont une face intérieure est munie d'une des faces obliques (27a) et d'une face de butée (27b) de la butée d'entraînement, **en ce qu'**à l'intérieur de la douille rotative (27) est logé un élément de transmission (28) relié, de façon assujettie en rotation, à un recouvrement (7), par l'intermédiaire d'un arbre d'entraînement (30), l'élément de transmission (28) étant muni de l'autre face oblique (28a) et de l'autre face de butée (28b) de la butée d'entraînement, de façon susceptible de tourner par rapport à la douille rotative (27) et avec elle et d'être déplacé axialement, **en ce qu'**un ressort (33) est prévu, qui charge les faces obliques (27a) et (28a) les unes contre les autres, et **en ce qu'**une autre butée (16, 17) est prévue, qui délimite la composante parallèle de la course de déplacement dans la direction de la position de fermeture.

17. Machine à café selon l' une des revendications 1 à 16, **caractérisée en ce que** l'entraînement (9) est susceptible d'être bloqué.

18. Machine à café selon l'une des revendications 1 à 17, **caractérisée en ce que** l'entraînement (9) contient un moteur, disposé à côté du dispositif d'échaudage (5).
